(19) Europäisches Patentamt
European Patent Office
Office européen des brevets

(11) EP 0 813 117 B1

(12) EUROPÄISCHE PATENTSCHRIFT

(45) Veröffentlichungstag und Bekanntmachung des Hinweises auf die Patenterteilung:
**21.05.2003 Patentblatt 2003/21**

(51) Int Cl.[7]: **G03G 9/09**, C09B 63/00, C09D 11/00, C09D 5/03, H01G 7/02

(21) Anmeldenummer: **97108971.9**

(22) Anmeldetag: **04.06.1997**

(54) **Verwendung von Azomagentapigment in einem elektrophotographischen Toner und Entwickler**

Use of azo magenta pigment in an electrophotographic toner and developer

Utilisation de pigment magenta azoique dans une révélateur et agent de développement électrophotographique

(84) Benannte Vertragsstaaten:
**BE CH DE FR GB IT LI NL**

(30) Priorität: **13.06.1996 DE 19623565**

(43) Veröffentlichungstag der Anmeldung:
**17.12.1997 Patentblatt 1997/51**

(73) Patentinhaber: **Clariant GmbH**
**65929 Frankfurt am Main (DE)**

(72) Erfinder:
- **Macholdt, Hans-Tobias, Dr.**
  **64297 Darmstadt-Eberstadt (DE)**
- **Baumgart, Dieter, Dr.**
  **63329 Egelsbach (DE)**
- **Baur, Rüdiger, Dr.**
  **65817 Eppstein (DE)**

(56) Entgegenhaltungen:
**EP-A- 0 065 751**
**EP-A- 0 202 906**
**DE-A- 2 001 505**
**US-A- 4 729 796**
**US-A- 4 765 841**
**US-A- 4 957 841**
**US-A- 5 190 585**
**US-A- 5 352 729**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 813 117 B1

## Beschreibung

Die vorliegende Erfindung betrifft einen elektrophotographischen Toner und Entwickler auf Basis von C.I. Pigment Red 57:1 als Farbmittel.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponenten-Entwickler genannt), darüberhinaus sind noch Spezialtoner, wie z.B. Magnet- oder Flüssigtoner und Polymerisationstoner, im Einsatz (L.B. Schein, "Electrophotography and Development Physics"; Springer Series in Electrophysics 14; Springer-Verlag, 2nd edition, 1992).

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Fotokopierern, Laserdruckern, LED-(Light emitting diods), LCS-(Liquid crystal shutter)-Druckern oder anderen digitalen Druckern auf elektrophotographischer Basis, in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Als farbgebende Komponente werden in Bunttonern typischerweise organische Farbpigmente eingesetzt. Farbpigmente haben gegenüber Farbstoffen wegen ihrer Unlöslichkeit im Anwendungsmedium erhebliche Vorteile, wie z.B. bessere Thermostabilität und Lichtechtheit.

Aufbauend auf dem Prinzip der "subtraktiven Farbmischung" kann mit Hilfe der drei Primärfarben Gelb, Cyan und Magenta das gesamte für das menschliche Auge sichtbare Farbspektrum wiedergegeben werden. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

Von Farbmitteln ist bekannt, daß sie die triboelektrische Aufladung von Tonern teilweise nachhaltig beeinflussen können (H.-T. Macholdt, A. Sieber, Dyes & Pigments 9 (1988), 119-127). Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden. Dieses Vorgehen ist entsprechend aufwendig und kommt dann bei Farbtonern für Prozeßfarbe noch zusätzlich zu den bereits vorher beschriebenen Schwierigkeiten dazu.

Darüberhinaus ist für die Praxis wichtig, daß die Farbmittel eine hohe Thermostabilität und eine gute Dispergierbarkeit besitzen. Typische Einarbeitungstemperaturen für Farbmittel in die Tonerharze liegen bei Verwendung von Knetern oder Extrudern zwischen 100°C und 200°C. Dementsprechend ist eine Thermostabilität von 200°C, besser 250°C, von großem Vorteil. Wichtig ist auch, daß die Thermostabilität über einen längeren Zeitraum (ca. 30 Minuten) und in verschiedenen Bindemittelsystemen gewährleistet ist. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, die noch weitere Inhaltsstoffe, wie Ladungssteuermittel, Wachse oder Fließhilfsmittel, enthalten können oder im Nachhinein zugesetzt bekommen können.

Magentapigmente für elektrophotographische Toner und Entwickler sind in zahlreicher Form im Einsatz. Typischerweise eingesetzte Magentapigmente sind C.I.Pigment Red 122 auf Chinacridonbasis, C.I. Pigment Red 48, C. I. Pigment Red 57:1, C.I. Pigment Red 146 und C.I. Pigment Red 184 auf Azobasis, sowie C.I. Pigment Violett 1 und C.I. Pigment Red 8 auf Triarylcarboniumbasis.

Von besonderem Interesse ist das Magentafarbmittel C.I. Pigment Red 57:1, da es dem Standardmagentafarbton entspricht. Eine Alternative zu C.I. Pigment Red 57:1 ist wegen seines Farbtons C.I. Pigment Violett 1, welches jedoch schlechtere Echtheitseigenschaften, insbesondere Lichtechtheitseigenschaften, besitzt, so daß es in der Praxis in Tonern meist mit dem sehr viel lichtechteren C.I. Pigment Red 122 (2,9-Dimethylchinacridon) abgemischt werden muß.

Grundsätzlich besteht Bedarf an einem Magenta-Pigment, das eine möglichst hohe Transparenz, Blaustichigkeit, gute Dispergierbarkeit und einen möglichst stabilen triboelektrischen Eigeneffekt besitzt.

Unter einem stabilen triboelektrischen Eigeneffekt wird verstanden, daß das Pigment seinen maximalen triboelektrischen Effekt auf den Tonern nach möglichst kurzer Aktivierzeit erreicht und dieser Wert über eine möglichst lange Aktivierzeit stabil bleibt. Toner und Entwickler, die instabile q/m-Werte zeigen, d.h. deren Aufladungshöhe stark von der Aktivierzeit abhängt, sind entsprechend schwer zu kontrollieren.

Die Transparenz ist von zentraler Bedeutung, weil beim Vollfarbkopieren oder Drucken die Farben Gelb, Cyan und Magenta übereinander kopiert oder gedruckt werden, wobei die Reihenfolge der Farben vom Gerät abhängt. Ist nun eine oben liegende Farbe nicht transparent genug, so kann die darunter liegende nicht ausreichend durchscheinen und die Farbwiedergabe ist verzerrt. Beim Kopieren oder Drucken auf Overhead-Folien ist die Transparenz noch bedeutsamer, da hier mangelnde Transparenz auch nur einer Farbe die gesamte Bildprojektion grau erscheinen läßt.

Der vorliegenden Erfindung lag die Aufgabe zugrunde, ein möglichst farbstarkes, transparentes und blaustichiges Magenta-Farbmittel mit möglichst stabilem triboelektrischem Eigeneffekt, guter Dispergierbarkeit und hoher Thermostabilität für die Anwendung in elektrophotographischen Tonern und Entwicklern, Pulvern und Pulverlacken, Ink-Jet-Tinten sowie in Elektretmaterialien zur Verfügung zu stellen.

Die Aufgabe wurde überraschenderweise durch nachstehend charakterisiertes Azopigment gelöst. Gegenstand der vorliegenden Erfindung ist die Verwendung eines Azopigmentes C.I. Pigment Red 57:1 als Farbmittel in elektrophotographischen Tonern und Entwicklern, Pulvern und Pulverlacken, Elektretmaterialien sowie in Ink-Jet-Tinten, dadurch gekennzeichnet, daß das Azopigment eine spezifische Oberfläche des Pigmentpulvers von mehr als 70 $m^2/g$, vorzugsweise mehr als 80 $m^2/g$, insbesondere mehr als 85 $m^2/g$ hat 20 bis 50 gew.-% vorzugsweise 25 bis 40 gew.-%, bezogen auf das Gesamtgewicht von Hilfsmittel und Azopigment, eines Hilfsmittels aus der Gruppe der Kolophoniumharze und Abietinsäuren enthält, und daß die Azopigmentteilchen ein Länge-zu-Breite-Verhältnis von durchschnittlich kleiner als 2,8:1 und eine mittlere Teilchengröße $d_{50}$ von kleiner als 130 nm besitzen. Das Pigmentpulver kann eine spezifische Oberfläche von bis zu 200 $m^2/g$, insbesondere bis zu 150 $m^2/g$, haben.

Neu und überraschend ist, daß ein Pigment Red 57:1 mit der erfindungsgemäßen Teilchenform, Teilchengröße und spezifischen Oberfläche eine signifikante Verbesserung gegenüber bislang üblichem C.I. Pigment Red 57:1 hinsichtlich Transparenz und Blaustichigkeit bei guter Farbstärke und Dispergierbarkeit und stabilem elektrostatischen Eigeneffekt darstellt. Insbesondere ist das Länge-zu-Breite-Verhältnis durchschnittlich kleiner als 2,7:1 und die Teilchengröße $d_{25}$ ist kleiner als 100 nm und $d_{75}$ ist kleiner als 180 nm.

Herkömmliches C.I. Pigment Red 57:1, besitzt einen starken negativen elektrostatischen Effekt (JA-OS 62-71 966, P.Gregory "High Technology Applications of Organic Colorants", Plenum Press, New York 1991, pp 99-102). In EP-A-0 359 123 wird beschrieben, wie durch Zusatz von geeigneten Ammonium-, Immonium-, Phosphonium-, Arsonium- oder Stiboniumverbindungen der starke negative Triboeffekt teilweise oder ganz aufgehoben werden kann, wobei die genannten Zusätze entweder bei der Kupplungsreaktion, bei der Verlackung oder während des Pigmentfinishs zugegeben werden müssen. Trotz Verwendung von Kolophoniumharzen bei der Herstellung zügen C.I. Pigment Red 57:1. Zubereitungen eine unbefriedigende Ladungskonstanz.

Darüberhinaus wurde beschrieben, daß durch spezielle Masterbatches, d.h. hochkonzentrierte Pigmentvordispersionen in ausgewählten Harzen, der triboelektrische Eigeneffekt von C.I. Pigment Red 57:1 zurückgedrängt werden kann (V. Schlösser et al. Society of Imaging Science and Technology, 11th Congress on Advances in Non-Impact Printing Technologies, Hilton Head, SC, Oct. 29-Nov. 11, 1995, Proceedings pp 110-112.). Neben dem zusätzlichen Arbeitsschritt hat diese Methode den Nachteil, daß für jedes Tonerharz ein maßgeschneidertes Masterbatch verwendet werden muß, was sehr aufwendig und kommerziell unrentabel ist. Verwendet man lediglich das Masterbatch auf Basis des angegebenen Standardharzes, so wird das Tonersystem durch Fremdharz kontaminiert.

Durch den Einsatz des erfindungsgemäßen Azopigments werden die Nachteile solcher zusätzlichen Arbeitsschritte vermieden.

Die Herstellung von herkömmlichem C.I. Pigment Red 57:1 ist beispielsweise in "Ullmanns Encyklopädie der Technischen Chemie, Band 18, S. 661-695, Verlag Chemie, Weinheim 1979; oder in "W. Herbst, K. Hunger, Industrial Organic Pigments, VCH Weinheim 1993" oder in "Pigment Handbook" Herausgeber: T.C. Patton, J.Wiley + Sons, New York, 1973 beschrieben. Die Herstellung des erfindungsgemäß verwendeten Azopigments erfolgt in der Weise, daß man zu einem beliebigen Zeitpunkt der Synthese ein Hilfsmittel auf Basis von Kolophoniumharzen und Abietinsäuren.

Die Zugabe des Hilfsmittels kann vor, während oder nach der Azokupplung und/oder vor, während oder nach dem Pigmentfinish erfolgen. Es ist erforderlich, das Hilfsmittel in einer solchen Menge zuzusetzen, daß das fertiggestellte Pulverpigment 20 bis 50 Gew.-%, bevorzugt 25 bis 40 Gew.-%, an Hilfsmittel, bezogen auf das Gesamtgewicht, enthält.

Durch das beschriebene Herstellungsverfahren wird das besagte Azopigment in der erfindungsgemäßen Form erhalten, wobei das besagte Hilfsmittel auf die Pigmentkristallite beaufschlagt ist.

Außer in elektrophotographischen Tonern und Entwicklern kann ein triboelektrisch veränderter Eigeneffekt eines Pigmentes auch zur Verbesserung der elektrostatischen Aufladung von Pulvern und Lacken führen, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von

Kleingegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:

a) Beim Corona-Verfahren wird der Pulverlack oder das Pulver an einer geladenen Corona vorbeigeführt und hierbei aufgeladen,
b) beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist. Auch eine Kombination von beiden Verfahren ist möglich.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise Epoxidharze oft in Kombination mit carboxyl- und hydroxylgruppenhaltigen Polyesterharzen eingesetzt.
Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydrid, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.
Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind, wobei bekannt ist, daß unter Umständen auch der triboelektrische Eigeneffekt eines Pigmentes für den Verlust der Aufladbarkeit eines an sich geeigneten Harzsystems verantwortlich sein kann (H-T. Macholdt, "Ladungssteuermittel als Konzept für die triboelektrische Aufladung"; EPS-Schriftenreihe "Praxis Forum, Fachbroschüre Oberflächentechnik 27/91" Seite 102-111; Technik + Kommunikations Verlags GmbH, Berlin (1991)). Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüberhinaus kann ein veränderter triboelektrischer Eigeneffekt eines Pigmentes zur Verbesserung der Elektreteigenschaften bei eingefärbten (pigmentierten) Elektretmaterialien führen, wobei typische Elektretmaterialien auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus basieren. Elektretmaterialien haben zahlreiche Einsatzgebiet und können ihre Ladung durch Corona- oder Triboaufladung erhalten (Lit: G.M. Sessler, "Electrets", Topics in Applied Physics, Vol 33, Springer Verlag, New York, Heidelberg, 2nd Ed., 1987).

Des weiteren kann ein veränderter triboelektrischer Eigeneffekt eines Pigmentes zu verbessertem Trennverhalten von eingefärbten (pigmentierten) Polymeren führen, die nach elektrostatischen Trennverfahren getrennt werden (Y. Higashiyau, J. of Electrostatics, 30, Seiten 203-212, 1993; und J.A. Cross "Electrostatics-Principles, Problems and Applications", Adam Hilger, Bristol, 1987, insbesondere Kapitel 5.3 "Electrostatic Seperation" sowie die darin zitierte Literatur). Dementsprechend ist der triboelektrische Eigeneffekt von Pigmenten auch für die Kunststoffmassenfärbung von Bedeutung. Ebenso ist der triboelektrische Eigeneffekt bei Verfahrens-/Verarbeitungsschritten, bei denen es zu intensivem Reibungskontakt kommt, von Bedeutung, wie z.B. Spinnprozessen, Folienziehprozessen oder weiteren Formgebungsverfahren.

Außerdem ist das erfindungsgemäße Pigment Red 57:1 als Farbmittel in Ink-Jet Tinten auf wäßriger und nicht wäßriger Basis, insbesondere in solchen Tinten, die nach dem Hot-melt-Verfahren arbeiten, geeignet, beispielsweise für Ink-Jet-Tinten, enthaltend 0,01 bis 50 Gew.-%, vorzugsweise 0,5 bis 20 Gew.-%, des in Anspruch 1 oder 2 definierten Azopigments.

Der besondere Vorteil des erfindungsgemäß verwendeten Azopigments, insbesondere in Tonerbindemitteln wird erkennbar im Vergleich zum bisherigen Standard von C.I. Pigment Red 57:1 (®Permanent Rubin L6B02).
So zeigt das erfindungsgemäße Pigment Red 57:1 (Beispiel 1) eine wesentlich verbesserte Transparenz (um 5 Bewertungseinheiten transparenter und eine um 5 Bewertungseinheiten erhöhte Blaustichigkeit), was eine ganz erhebliche Verbesserung für die Praxis bedeutet. Insbesondere ist hervorzuheben, daß das erfindungsgemäße Pigment im Vergleich zum bekannten Standard nicht nur eine kleinere Teilchengröße aufweist, sondern daß auch die Teilchenform sich von ausgeprägt nadelförmig in Richtung würfelförmig verbessert. Diese Verbesserung bewirkt eine deutlich leichtere Dispergierbarkeit und Suspendierbarkeit in polymeren Materialien und (organischen) Lösemitteln.

Die erzielte Transparenzverbesserung ist für die Praxis von großem Vorteil und auch für das menschliche Auge sofort erkennbar. Darüberhinaus ist überraschend, daß trotz der starken Transparenzverbesserung durch die sehr viel höhere spezifische Oberfläche die anderen vorteilhaften coloristischen Pigmenteigenschaften wie Farbton, Thermostabilität und Lichtechtheit nicht verlorengehen. Dies wird z.B. daran erkennbar, daß im Röntgenbeugungsdiagramm sowohl die Kristallmodifikation als auch Lage und Halbwertsbreite der Reflexionsbanden nahezu unverändert bleiben.

Weiterhin ist die Verbesserung des triboelektrischen Eigeneffekts des erfindungsgemäß verwendeten Pigments gegenüber dem bisherigen Stand der Technik deutlich erkennbar. Während das im Vergleichsbeispiel aufgeführte C.I. Pigment Red 57:1 einen sehr instabilen triboelektrischen Aufladungseffekt zeigt, ist dieser bei dem erfindungsgemäßen Pigment sehr stabil, d.h. der maximale Aufladungswert wird schnell erreicht und bleibt dann über 24 Stunden hinweg nahezu konstant. So lädt ein Testtoner mit 5 % des erfindungsgemäßen Pigmentes (Beispiel 1.3.1) bereits nach 5 min zu einem Spitzenwert auf, während ein vergleichbarer Testtoner mit einem Pigment gemäß dem Stand der Technik (Vergleichsbeispiel 1.3.1) selbst nach 24 Stunden Reibungsaufladung noch keinen konstanten Endwert zeigt.

Das erfindungsgemäß verwendete Azopigment kann mit zahlreichen Ladungssteuermitteln, d.h. sowohl positiv als auch negativ steuernden, kombiniert werden und gute anwendungstechnische Aufladbarkeiten erzielen.

Als Ladungssteuermittel, die mit dem erfindungsgemäß verwendeten Azopigment kombiniert werden können, kommen in Betracht:

> Triphenylmethane; Ammonium- und Immoniumverbindungen; (Iminiumverbindungen); fluorierte Ammonium- und Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen;
> Calix(n)arene; ringförmig verknüpfte Oligosaccharide (Cyclodextrine);
> Polyestersalze; Metallkomplexverbindungen, insbesondere Salicylat-Metall- und Salicylat-Nichtmetallkomplexe, $\alpha$-Hydroxycarbonsäure-Metall- und -Nichtmetallkomplexe; Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit dem erfindungsgemäß verwendeten Azopigment kombiniert werden.
Triarylmethan-Derivate wie beispielsweise:

> Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue-2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und
> Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum Colour Index Solvent Blue 125, 66 und 124 ganz besonders eignen.

Besonders gut geeignet ist Colour Index Solvent Blue 124 in Form seines hochkristallinen Sulfats oder des Trichlortriphenylmethyltetrachloraluminats.

Ganz besonders bevorzugt sind Metallkomplexe mit den CAS-Nummern 84179-66-8 (Chromazokomplex), 115706-73-5 (Eisenazokomplex), 31714-55-3 (Chromazokomplex), 84030-55-7 (Chromsalicylatkomplex), 42405-40-3 (Chromsalicylatkomplex) sowie die quaternäre Ammoniumverbindung CAS-Nr. 116810-46-9.

Beispiele von für die Herstellung von Elektretfasern gut geeigneten Ladungssteuermitteln der Triphenylmethan-Reihe sind die in der DE-A-1 919 724 und der DE-A-1 644 619 beschriebenen Verbindungen.

Weiterhin geeignet sind Triphenylmethane wie beschrieben in US-A-5 051 585, insbesondere solche der Formel (2)

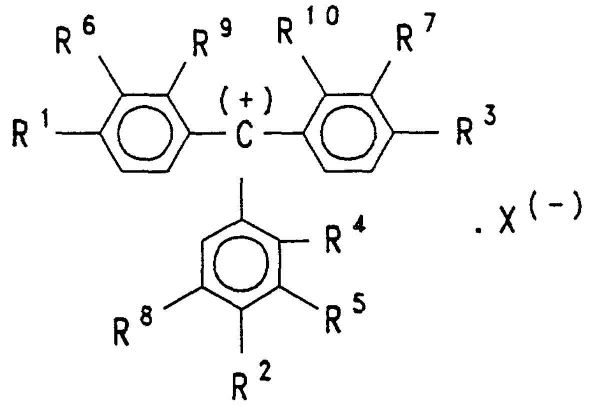

(2)

worin
$R^1$ und $R^3$ gleich oder verschieden sind und $-NH_2$, eine Mono- und Dialkylaminogruppe, deren Alkylgruppen 1 bis 4, vorzugsweise 1 oder 2, C-Atome haben, eine Mono- oder Di-omega-hydroxyalkylaminogruppe, deren Alkylgruppen 2 bis 4, vorzugsweise 2, C-Atome haben, eine gegebenenfalls N-Alkylsubstituierte Phenyl- oder Phenalkylaminogruppe, deren Alkyl 1 bis 4, vorzugsweise 1 oder 2, C-Atome hat, deren Phenalkylgruppe in der aliphatischen Brücke 1 bis 4, vorzugsweise 1 oder 2, C-Atome, hat und deren Phenylkern einen oder zwei der folgenden Substituenten: Alkyl mit 1 oder 2 C-Atomen, Alkoxy mit 1 oder 2 C-Atomen und die Sulfonsäuregruppe tragen kann, bedeuten,
$R^2$ Wasserstoff ist oder eine der für $R^1$ und $R^3$ genannten Bedeutungen hat,
$R^4$ und $R^5$ Wasserstoff, Halogen, vorzugsweise Chlor, oder eine Sulfonsäuregruppe bedeutet oder $R^4$ mit $R^5$ zusammen einen ankondensierten Phenylring bildet,
$R^6$, $R^7$, $R^9$ und $R^{10}$ jeweils Wasserstoff oder einen Alkylrest mit 1 oder 2 C-Atomen, vorzugsweise Methyl, bedeuten und
$R^8$ Wasserstoff oder Halogen, vorzugsweise Chlor, ist und
$X^-$ für ein stöchiometrisches Äquivalent eines Anions steht, insbesondere für ein Chlorid-, Sulfat-, Molybdat-, Phosphormolybdat- oder Borat-Anion.

Besonders bevorzugt ist ein Ladungssteuermittel der Formel (2), worin $R^1$ und $R^3$ Phenylaminogruppen, $R^2$ eine m-Methylphenylaminogruppe und die Reste $R^4$ bis $R^{10}$ alle Wasserstoff sind.

Weiterhin geeignet sind Ammonium- und Immoniumverbindungen, wie beschrieben in US-A-5 015 676.

Weiterhin geeignet sind fluorierte Ammonium- und Immoniumverbindungen, wie beschrieben in US-A-5 069 994, insbesondere solche der Formel (3)

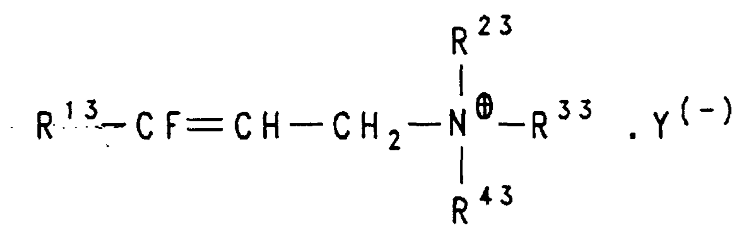

(3)

worin
$R^{13}$ perfluoriertes Alkyl mit 5 bis 11 C-Atomen,
$R^{23}$, $R^{33}$ und $R^{43}$ gleich oder verschieden sind und Alkyl mit 1 bis 5, vorzugsweise 1 bis 2, C-Atomen bedeuten und
$Y^-$ ein stöchiometrisches Äquivalent eines Anions, vorzugsweise eines Tetrafluoroborat- oder Tetraphenylborat-Anions ist. Vorzugsweise bedeutet
$R^{13}$ perfluoriertes Alkyl mit 5 bis 11 C-Atomen,
$R^{23}$ und $R^{33}$ Ethyl und
$R^{43}$ Methyl.

Weiterhin geeignet sind biskationische Säureamide, wie beschrieben in WO 91/10172, insbesondere solche der Formel (4)

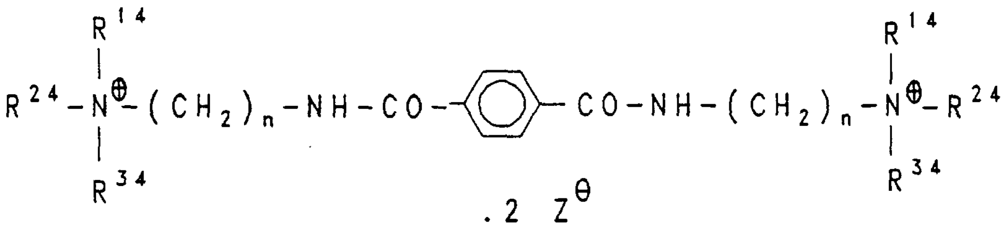

(4)

worin
$R^{14}$, $R^{24}$ und $R^{34}$ gleiche oder verschiedene Alkylreste mit 1 bis 5 C-Atomen, vorzugsweise Methyl, sind,
n für eine ganze Zahl von 2 bis 5 steht, und
$Z^-$ für ein stöchiometrisches Äquivalent eines Anions steht, vorzugsweise für ein Tetraphenylborat-Anion.

Weiterhin geeignet sind Diallylammoniumverbindungen, wie beschrieben in DE-A-4 142 541, insbesondere solche der Formel (5)

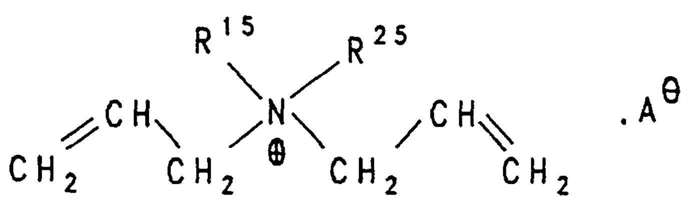

(5)

worin
$R^{15}$ und $R^{25}$ gleiche oder verschiedene Alkylgruppen mit 1 bis 5, vorzugsweise 1 oder 2, C-Atomen bedeuten, insbesondere aber für Methylgruppen stehen und $A^-$ für ein stöchiometrisches Äquivalent eines Anions steht, vorzugsweise für ein Tetraphenylborat-Anion steht, sowie die aus diesen erhältlichen polymeren Ammoniumverbindungen der Formel (6), wie beschrieben in DE-A-4 029 652 oder DE-A-4 103 610,

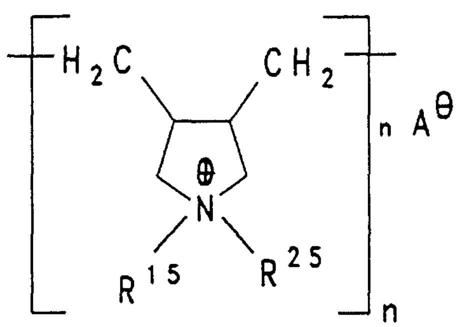

(6)

worin n einen Wert hat, der Molekulargewichten von 5000 bis 500000 entspricht. Besonders bevorzugt sind jedoch Verbindungen der Formel (6) mit Molekulargewichten von 40000 bis 400000.

Weiterhin geeignet sind Arylsulfid-Derivate, wie beschrieben in DE-A-4 031 705, insbesondere solche der Formel (7)

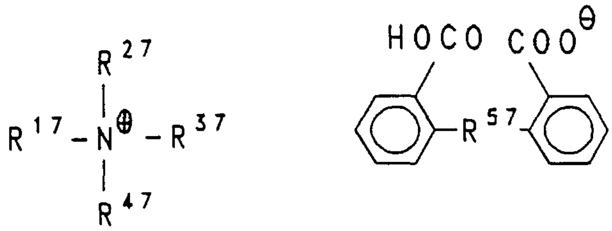

(7)

worin
$R^{17}$, $R^{27}$, $R^{37}$ und $R^{47}$ gleiche oder verschiedene Alkylgruppen mit 1 bis 5, vorzugsweise 2 oder 3, C-Atomen bedeuten, und
$R^{57}$ einer der zweiwertigen Reste -S-, -S-S-, -SO- oder $-SO_2-$ ist. Beispielsweise sind $R^{17}$ bis $R^{47}$ Propylgruppen und $R^{57}$ die Gruppe -S-S-.

Weiterhin geeignet sind Phenolderivate, wie beschrieben in EP-A-0 258 651, insbesondere solche der Formel (8)

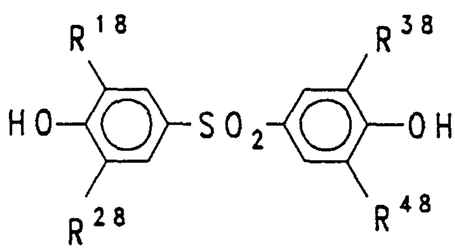

(8)

worin
$R^{18}$ und $R^{38}$ Alkyl- oder Alkenylgruppen mit 1 bis 5, vorzugsweise 1 bis 3, C-Atomen, und $R^{28}$ und $R^{48}$ Wasserstoff oder Alkyl mit 1 bis 3, vorzugsweise Methyl, bedeuten.
Als Beispiele seien die Verbindungen genannt, in denen $R^{18}$ bis $R^{48}$ Methylgruppen sind oder in denen $R^{28}$ und $R^{48}$ Wasserstoff sind und $R^{18}$ und $R^{38}$ für die Gruppe $-CH_2-CH=CH_2$ stehen.

Weiterhin geeignet sind Phosphoniumverbindungen und fluorierte Phosphoniumverbindungen, wie beschrieben in US-A-5 021 473 und in US-A-5 147 748, insbesondere solche der Formeln (9)

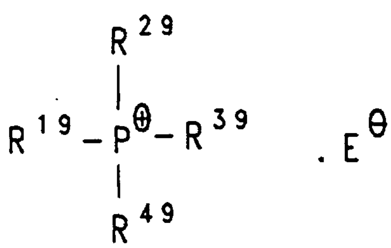

(9)

worin
$R^{19}$, $R^{29}$, $R^{39}$ und $R^{49}$ gleiche oder verschiedene Alkylgruppen mit 1 bis 8, vorzugsweise 3 bis 6, C-Atomen, bedeuten und $E^{\theta}$ für ein stöchiometrisches Äquivalent eines Anions steht, vorzugsweise für ein Halogenid-Anion;
und (10)

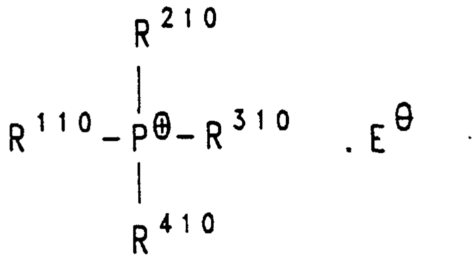

(10)

worin

$R^{110}$ ein hochfluorierter Alkylrest mit 5 bis 15, vorzugsweise 6 bis 10, C-Atomen,

$R^{210}$, $R^{310}$ und $R^{410}$ Alkyl mit 3 bis 10 C-Atomen oder Phenyl sind.

Als Beispiel für eine Verbindung der Formel (9) sei genannt Tetrabutylphosphonium-bromid, als Beispiele für Verbindungen der Formel (10) seien genannt die Verbindungen mit $R^{110} = C_8F_{17}\text{-}CH_2\text{-}CH_2\text{-}$, $R^{210}=R^{310}=R^{410}$ = Phenyl und $E^{\theta} = PF_6^{\ominus}$ oder das Tetraphenylborat-Anion.

Weiterhin geeignet sind Calix(n)arene, wie beschrieben in EP-A-0 385 580 und wie beschrieben in EP-A-0 516 434, insbesondere solche der Formel (11)

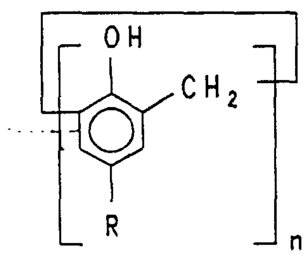

(11)

worin

R für Wasserstoff, Halogen, vorzugsweise Chlor, geradkettiges oder verzweigtes Alkyl mit 1 bis 12 C-Atomen, Aralkyl, z.B. Benzyl oder Phenethyl, $-NO_2$, $-NH_2$ oder $NHR^{111}$ steht, wobei $R^{111}$ Alkyl mit 1 bis 8 C-Atomen, gegebenenfalls $C_1$-$C_4$-alkylsubstituiertes Phenyl oder $-Si(CH_3)_3$ bedeutet.

Weiterhin geeignet sind Metallkomplexverbindungen, wie Chrom-, Kobalt-, Eisen-, Zink- oder Aluminium-Azokomplexe oder Chrom-, Kobalt-, Eisen-, Zinkoder Aluminium-Salicyl- oder Borsäurekomplexe der Formeln (12), (13) und (14)

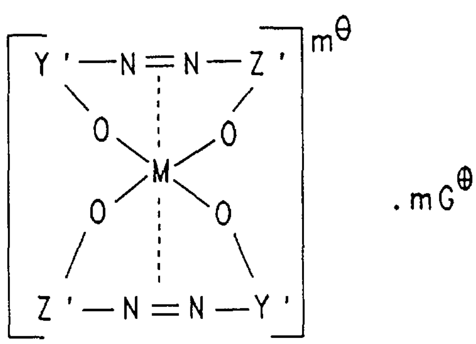

(12)

worin

M ein 2-oder 3-wertiges Metallatom, vorzugsweise Chrom, Kobalt, Eisen, Zink oder Aluminium bedeutet, oder auch

ein Nichtmetall wie Bor oder Si,
Y' und Z' für zweibindige aromatische Ringe, vorzugsweise der Formeln

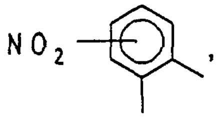 , 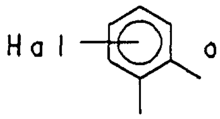 oder 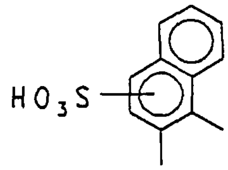

stehen, und m eine der Zahlen 1 oder 2 ist;

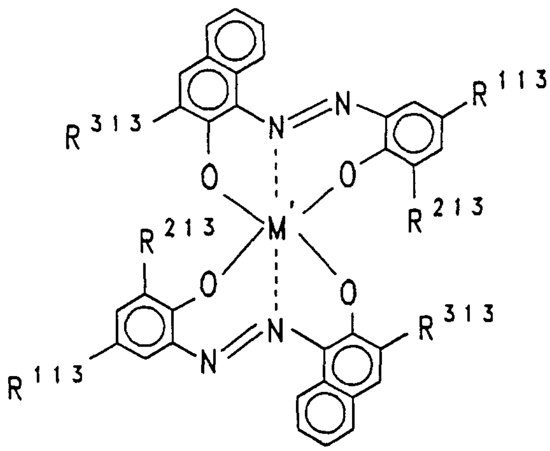 . G (13)

worin
M' ein 2- oder 3-wertiges Metallatom, vorzugsweise Chrom, Kobalt, Eisen,
$R^{113}$ Wasserstoff, Halogen, vorzugsweise Cl, Nitro oder Amidosulfonyl,
$R^{213}$ Wasserstoff oder Nitro,
$R^{313}$ Wasserstoff, die Sulfonsäuregruppe, -CO-NH-$R^{413}$ ist, wobei $R^{413}$ Phenyl, Alkyl mit 1 bis 5 C-Atomen, das gegebenenfalls durch eine Mono-, Di- oder Trialkylaminogruppe substituiert ist, bedeutet und
G in Formel (12) und (13) jeweils ein Gegenion ist, das die Neutralität des Komplexes herstellt, vorzugsweise ein oder mehrere Protonen, ein oder mehrere Alkali- oder Ammonium-Ionen;

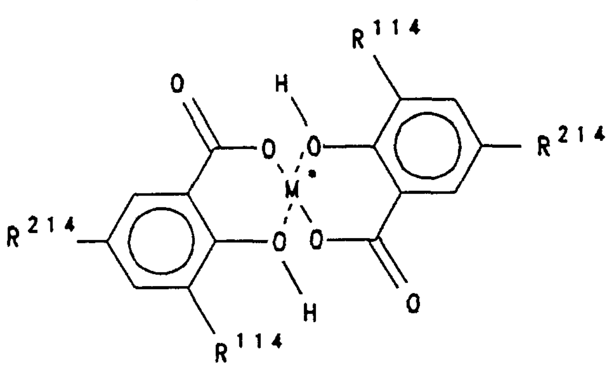 (14)

worin
M* ein zweiwertiges Metall-Zentralatom, vorzugsweise ein Zinkatom,
$R^{114}$ und $R^{214}$ gleiche oder verschiedene, geradkettige oder verzweigte Alkylgruppen mit 1 bis 8, vorzugsweise 3 bis 6, C-Atomen, beispielsweise tert. Butyl, bedeuten.

Derartige Verbindungen sind beschrieben in EP-A-0 162 632, US-A-4 908 225, EP-A-0 393 479,EP-A-0 360 617, EP-A-0 291 930, EP-A-0 280 272, EP-A-0 255 925, EP-A-0 251 326, EP-A-0 180 655, EP-A-0 141 377, US-A-4 939 061, US-A-4 623 606, US-A-4 590 141 und/oder charakterisiert durch die CAS-Nummern 31714-55-3, 104815-18-1, 84179-68-8, 110941-75-8, 32517-36-5, 38833-00-00, 95 692-86-7, 85414-43-3, 136709-14-3, 135534-82-6, 135534-81-5, 127800-82-2, 114803-10-0, 114803-08-6.

Beispiele für besonders bevorzugte Metallkomplexverbindungen der Formel (13) sind in der nachfolgenden Tabelle 1 angegeben:

Tabelle 1

| $R^{113}$ | $R^{213}$ | $R^{313}$ | $R^{413}$ | M' | G |
|---|---|---|---|---|---|
| Cl | H | H | - | Cr | $H^+$ |
| $NO_2$ | $NO_2$ | $-CONHR^{413}$ | Phenyl | Cr | $H^+/Na^+/NH_4^+$ |
| Cl | H | $-CONHR^{413}$ | Phenyl | Fe | $H^+/Na^+/NH_4^+$ |
| Cl | H | $-CONHR^{413}$ | $-(CH_2)_3-N^+(CH_3)_3$ | Cr | $Cl^-$ |
| $-SO_2NH_2$ | H | H | - | Co | $H^+/Na^+/NH_4^+$ |

Weiterhin geeignet sind Benzimidazolone, wie beschrieben in EP-A-0 347 695, insbesondere solche der Formel (15)

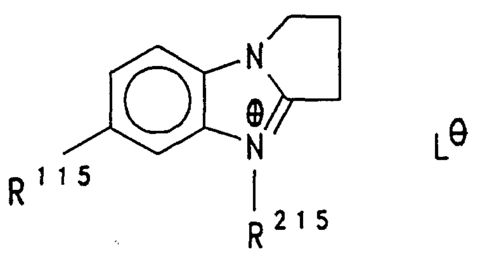

(15)

worin
$R^{115}$ ist ein Alkyl mit 1 bis 5 C-Atomen und $R^{215}$ ein Alkyl mit 1 bis 12 C-Atomen und L ein stöchiometrisches Äquivalent eines Anions, insbesondere ein Chlorid- oder Tetrafluoborat-Anion.
Als Beispiel sei die Verbindung mit $R^{115} = CH_3$ und $R^{215} = C_{11}H_{23}$ genannt.

Weiterhin geeignet sind ringförmig verknüpfte Oligosaccharide, wie beschrieben in DE-A-4 418 842, insbesondere solche der Formel (16)

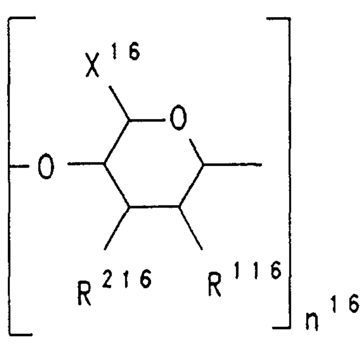

(16)

worin $n^{16}$ eine Zahl zwischen 3 und 100 ist, $R^{116}$ und $R^{216}$ die Bedeutung OH, $OR^{316}$, wobei $R^{316}$ substituiertes oder unsubstituiertes Alkyl-($C_1$-$C_{18}$), Aryl-($C_6$-$C_{12}$) oder Tosyl bedeuten, und $X^{16}$ die Bedeutung $CH_2OH$ oder $CH_2COR^{316}$ hat. Als Beispiele seien genannt:

$n^{16}$ = 6, $R^{116}$ und $R^{216}$ = OH, $X^{16}$ = $CH_2OH$
$n^{16}$ = 7, $R^{116}$ und $R^{216}$ = OH, $X^{16}$ = $CH_2OH$
$n^{16}$ = 8, $R^{116}$ und $R^{216}$ = OH, $X^{16}$ = $CH_2OH$.

Weiterhin geeignet sind Polymersalze, wie beschrieben in DE-A-4 332 170, deren anionische Komponente ein Polyester ist, der aus dem Reaktionsprodukt der einzelnen Komponenten a), b) und c) sowie gegebenenfalls d) und gegebenenfalls e) besteht, wobei

a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung (Funktionalität > 2), deren funktionelle Gruppen Hydroxyl oder Carboxyl, oder Hydroxyl und Carboxyl, sind und
e) eine Monocarbonsäure ist

und deren kationische Komponente Wasserstoffatome oder Metallkationen sind.

Weiterhin geeignet sind Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Grundsätzlich ist das erfindungsgemäß verwendete Pigment für Kombinationen mit positiven und negativen Ladungssteuermitteln (CCA) geeignet. Zweckmäßig sind dabei Mengen von 0,01 bis 20 Gew.-%, vorzugsweise 0,1 bis 5 Gew.-%, an Ladungssteuermittel, bezogen auf das Gesamtgewicht des elektrophotographischen Toners oder Entwicklers, Pulvers oder Pulverlacks, um die gewünschte Polarität einzustellen. Ein besonderer Vorteil hierbei ist das schnelle Erreichen des Aufladungsspitzenwertes und dessen sehr gute Konstanz. Da für eine gute triboelektrische (Toner)aufladung ein hoher Tonerdurchgangswiderstand notwendig ist (= geringe Leitfähigkeit), tragen die dielektrischen Kenndaten des erfindungsgemäßen Magentapigments zu dem guten triboelektrischen Verhalten bei (Ku/Liepins "Electrical Properties of Polymers" Hanser Publishers, Munich-Vienna-New York, 1987).

Die Kombination von Pigment und Ladungssteuermittel kann nachträglich durch physikalisches Mischen während der Pigmentsynthese, während des Finishvorganges oder durch entsprechendes Aufziehen auf die Pigmentoberfläche (Pigmentcoating) erfolgen.

Gegenstand der Erfindung ist weiterhin die Verwendung in elektrophotographischen Tonern oder Entwicklern, enthaltend ein übliches Tonerbindemittel, 0,01 bis 50 Gew.-%, vorzugsweise 0,5 bis 20 Gew.-%, des erfindungsgemäßen Azopigments und 0 bis 20 Gew.-%, vorzugsweise 0,1 bis 5 Gew.-%, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Benzimidazolone; Azine, Thiazine oder Oxazine.

Besonders bevorzugt sind elektrophotographische Toner oder Entwickler, die als Ladungssteuermittel eine Verbindung der Formel (17)

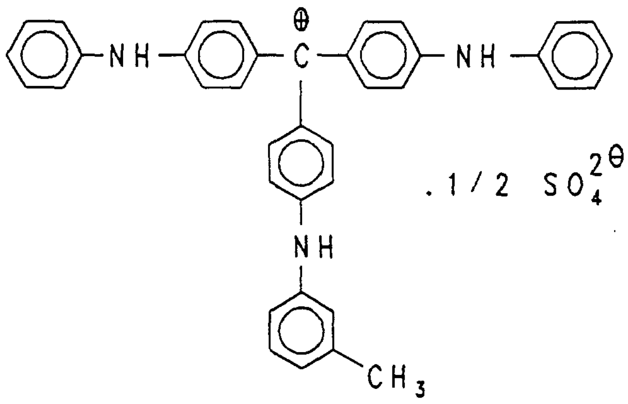

(17);

oder eine Verbindung der vorstehend genannten Formel (3);
oder eine Verbindung der vorstehend genannten Formel (5), worin $R^{15}$ und $R^{25}$ jeweils Methyl und $A^{\theta}$ ein Tetraphenylborat-Anion ist;
oder eine Verbindung der vorstehend genannten Formel (6), worin $R^{15}$ und $R^{25}$ jeweils Methyl, $A^{\theta}$ ein Tetraphenylborat-Anion ist und n einen Wert hat, der Molekulargewichten von 5000 bis 500 000 entspricht;
oder eine Verbindung der vorstehend genannten Formel (7);
oder eine Verbindung der vorstehend genannten Formel (13), worin $R^{113}$ Chlor, $R^{213}$ und $R^{313}$ Wasserstoff, M' Chrom, Kobalt oder Eisen und G ein oder zwei Protonen ist;
oder ein vorstehend genanntes Polymersalz, dessen anionische Komponente ein Polyester ist, enthalten.

Die gute Eignung des erfindungsgemäß Verwendeten Azopigments für die Pulverlackanwendung erkennt man an dem bereits bei 3 bar Sprühdruck erreichbaren hohen Ladestrom (1,2 µA in Beispiel 1.3.2) wobei typischerweise ein Ladestrom von 1 µA als Mindestvoraussetzung für eine genügende Aufladung angesehen wird. Einhergehend mit dem hohen Ladestrom ist eine gute Abscheidequote von jeweils deutlich über 70 %.

Gegenstand der Erfindung ist weiterhin die Verwendung in Pulvern oder Pulverlacken, enthaltend ein epoxid-, carboxyl- oder hydroxylgruppenhaltiges Polyester- oder Acrylharz oder eine Kombination daraus, 0,01 bis 50 Gew.-%, vorzugsweise 0,1 bis 5 Gew.-%, des erfindungsgemäßen Azopigments und 0 bis 20 Gew.-%, vorzugsweise 0,1 bis 5 Gew.-%, eines Ladungssteuermittels aus den vorstehend für elektrophotographische Toner genannten Klassen und bevorzugten Verbindungen.

Das erfindungsgemäß verwendete Pigment wird in einer Konzentration von 0,01 bis 50 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials homogen, beispielsweise durch Extrudieren oder Einkneten, eingearbeitet. Dabei kann das erfindungsgemäß eingesetzte Pigment als getrocknetes und gemahlenes Pulver, Dispersion oder Suspension in organischen oder anorganischen Lösungsmitteln, Preßkuchen, Masterbatch, Präparation, angeteigte Paste, als auf geeignete Träger, wie z.B. Kieselgur, $TiO_2$, $Al_2O_3$, aus wäßriger oder nicht-wäßriger Lösung aufgezogene Verbindung oder in sonstiger Form zugegeben werden. Ebenso kann das erfindungsgemäß verwendete Pigment grundsätzlich auch schon bei der Herstellung der jeweiligen Bindemittel zugegeben werden, d.h. im Verlauf von deren Polymerisation, Polyaddition oder Polykondensation.

Die Höhe der elektrostatischen Aufladung der elektrophotographischen Toner oder der Pulverlacke, in welche das erfindungsgemäße Pigment homogen eingearbeitet wird, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Meßstand die elektrostatische Aufladung gemessen (J.H. Dessauer, H.E. Clark, "Xerography and related Processes", Focal Press, N.Y., 1965, Seite 289; J.F. Hughes, "Electrostatic Powder Coating", Research Studies Press Ltd. Letchworth, Hertfordshire, England, 1984, Chapter 2). Bei der Bestimmung des q/m-Wertes oder der Triboaufladung von Pulverlacken ist die Teilchengröße von großem Einfluß, weshalb bei den durch Sichtung erhaltenen Toner- oder Pulverlackproben streng auf einheitliche Teilchengrößenverteilung geachtet wird. So wird für Toner eine mittlere Teilchengröße von 10 µm angestrebt, während für Pulverlacke eine mittlere Teilchengröße von 50 µm praktikabel ist.

Die Triboversprühung der Pulver(lacke) wird mit einem Sprühgerät mit einem Normsprührohr und einer Sterninnenstange bei maximalem Pulverdurchsatz mit einem Sprühdruck von 3 bar durchgeführt. Der zu besprühende

Gegenstand wird hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wird anschließend mit einem "Meßgerät" zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebende Stromstärke wird in µA angezeigt. Die Abscheidequote wird anschließend in % durch eine Differenzwiegung aus versprühtem und abgeschiedenem Pulverlack bestimmt.

Die Transparenz des erfindungsgemäß Verwendeten Azopigments in Tonerbindemittelsystemen wird wie folgt untersucht: In 70 Gew.-Teile eines Rohfirnis (bestehend aus 15 Gew.-Teilen des jeweiligen Tonerharzes und 85 Gew. -Teilen Ethylacetat) werden 30 Gew.-Teile des pigmentierten Testtoners (Herstellung siehe Beispiel 1.3.1) mit einem Dissolver eingerührt (5 min bei 5000 upm).

Der so erzeugte Testtonerfirnis wird gegen einen gleichermaßen erzeugten Standardpigmentfirnis mit einem Handcoater (Fa. RK Chemical Co. Ltd, England) auf geeignetes Papier (z.B. Buchdruckpapier) aufgerakelt. Eine geeignete Rakelgröße ist z.B. K bar N 3 (= 24 µm Rakelschichtdicke). Das Papier hat zur besseren Bestimmung der Transparenz einen schwarzen Balken aufgedruckt, die Transparenzunterschiede in dL-Werten werden nach DIN 55 988 bestimmt, bzw. nach der Prüfvorschrift Marketing Pigmente, Hoechst AG "Visuelle und Farbmetrische Bewertung" vom 13.09.1990 (Nr. 1/1) bewertet.

Der bei der Pigmentcharakterisierung angegebene Restsalzgehalt beschreibt die spezifische Leitfähigkeit des Extraktes einer wäßrigen Pigmentsuspension (Gemäß Prüfvorschrift Marketing Pigmente, Hoechst AG Nr. 1/10 (2/91) "Bestimmung der spezifischen Leitfähigkeit am Extrakt einer wäßrigen Pigmentsuspension"), der entsprechend angegebene pH-Wert wird nach der Prüfvorschrift Marketing Pigmente, Hoechst AG, 1/9 (2/91) "Bestimmung des pH-Wertes am Extrakt einer wäßrigen Pigmentsuspension" bestimmt, wobei bei beiden Bestimmungsmethoden bidestilliertes Wasser anstelle des in der Prüfvorschrift genannten E-Wasser ( = entionisiertes Wasser) verwendet wird.

Das im nachfolgenden Beispiel 1 genannte erfindungsgemäße C.I. Pigment Red 57:1 enthält als Hilfsmittel Abietinsäure in Form ihres Calciumsalzes (CAS-Nr. 13463-98-4) (ca. 30 %). Bei dem im Vergleichsbeispiel 1 aufgeführten Pigment 57:1 handelt es sich um ®Permanent Rubin L6B02 (Hoechst AG).

In den nachfolgenden Beispielen bedeuten Teile Gewichtsteile und Prozent Gewichtsprozent.

Beispiel 1

Synthese

37,4 Teile 4-Aminotoluol-3-sulfonsäure wurden in 500 Teilen Wasser und 26,1 Teilen Natronlauge (33 %) gelöst. Nach Abkühlung mit Eis auf 0°C wurden 56 Teile Salzsäure (31 %) zugesetzt und dann in 10 Minuten bei 0 bis 5°C mit 34,5 Teilen Natriumnitritlösung (40 %) diazotiert.

Ferner wurden 39 Teile β-Hydroxynaphthoesäure in 1000 Teilen Wasser und 70 Teilen Natronlauge (33 %) bei 20°C gelöst. In diese Lösung wurde dann innerhalb von 30 Minuten bei 20°C die Diazosuspension zugegeben. Nach Zugabe einer Lösung aus 37,8 Teilen Abietinsäure in 380 Teilen Wasser und 15 Teilen Natronlauge (33 %) wurde der pH-Wert mit verdünnter Salzsäure auf pH 9,0 eingestellt. Zur Verlackung wurde dann eine Lösung von 35 Teilen Calciumchlorid (77-80 %) in 100 Teilen Wasser in 5 Minuten zugetropft. Die Pigmentsuspension wurde nach Einstellung des pH-Wertes mit verdünnter Salzsäure auf pH 6,0 auf 80 bis 85°C angeheizt, 30 Minuten bei dieser Temperatur gerührt, abgesaugt, mit Wasser neutral und salzfrei gewaschen und bei 80°C bis zur Gewichstkonstanz getrocknet. Es wurden 126,2 Teile eines roten Farblacks erhalten.

1.1 Pigmentcharakteristik

| | |
|---|---|
| BET-Oberfläche | 90 $m^2/g$ |
| Restfeuchte (Ausheizbirne) | 1,0 % (Karl-Fischer: 4,9 %, inklusive Kristallwasser) |
| Restsalzgehalt | 0,4 mS/cm |
| pH | 7,4 |

Thermostabilität: Eine DTA (Differentialthermoanalyse), 3°C/min Aufheizrate, geschlossene Glasampulle, zeigt eine Thermostabilität von deutlich größer als 250°C.

Teilchengröße und -form (elektronenmikroskopisch ausgezählte Massenverteilung):

Teilchengröße und Teilchenform werden durch elektronenmikroskopische Aufnahme des Pigmentpulvers bestimmt. Hierzu wird das Pigment 15 min in Wasser dispergiert und anschließend aufgesprüht. Die Aufnahmen erfolgen bei 13000-facher und 29000-facher Vergrößerung.

Teilchengröße:

$d_{50}$ = 120 nm; $d_{25}$ = 88 nm; $d_{75}$ = 160 nm.

Teilchenform:

Das Länge-Breite-Verhältnis wurde bestimmt mit 2,65:1.

Dielektrische Kenndaten:

| | | |
|---|---|---|
| Ω·cm: | | $4 \cdot 10^{15}$ |
| ε: | (1 kHz) | 3,7 |
| tan δ | (1 kHz) | $4 \cdot 10^{-3}$ |

Röntgenbeugungsdiagramm ($CuK_{\alpha}$-Strahlung):

2 Theta (s= stark, m= mittel, w= schwach):
4,72 (s); 11,06 (w); 13,74 (w); 15,07 (m); 15,62 (m); 18,34 (s); 18,70 (s); 19,42 (w); 21,44 (m); 26,05 (s); 27,31 (m).

1.2 Transparenz

In einem Tonerharz (Polyester auf Bisphenol-A-Basis) wurde eine verbesserte Transparenz gemessen (24 µm Schichtdicke), wobei der pigmentierte Testtoner wie in Beispiel 1.3.1 hergestellt wurde.
Gegenüber dem im Vergleichsbeispiel angegebenen Standard wird bei gleicher Farbstärke eine um 5 Bewertungseinheiten erhöhte Transparenz und ein um 5 Bewertungseinheiten verstärkter Blauton gefunden.

Bewertung der Transparenzunterschiede nach Prüfvorschrift 1/1: 1 ≙ Spur, 2 ≙ etwas; 3 ≙ merklich; 4 ≙ deutlich; 5 ≙ wesentlich; 6 ≙ bedeutend transparenter.

1.3 Elektrostatische Eigenschaften

1.3.1

5 Teile des Pigmentes aus Beispiel 1.1 werden mittels eines Kneters innerhalb von 45 Min. in 95 Teile eines Tonerbindemittels (Polyester auf Bisphenol-A-Basis) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Silikon beschichteten Ferrit-Teilchen der Größe 50 bis 200 µm (Schüttdichte 2,75 $g/cm^3$) besteht. (FBM 96-100; Fa. Powder Techn.)

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei 40 bis 60 %iger relativer Luftfeuchte. In Abhängigkeit von der Aktivierdauer werden folgende q/m-Werte [µC/g] gemessen:

| Aktivierdauer | Aufladung q/m [µC/g] |
|---|---|
| 5 Min. | - 17 |
| 10 Min. | - 17 |
| 30 Min. | - 16 |
| 2 Std. | - 16 |

(fortgesetzt)

| Aktivierdauer | Aufladung q/m [µC/g] |
|---|---|
| 24 Std. | - 15 |

1.3.2

5 Teile des Pigmentes werden, wie in Beispiel 1.3.1 beschrieben, in 95 Teile eines Pulverlackbindemittels auf Basis eines TGIC-Polyester, z.B. ®Uralac P 5010 (DSM, Holland), homogen eingearbeitet. Zur Bestimmung der Abscheidequote werden 30 g des Test-Pulverlackes mit einem definierten Druck durch eine Tribopistole versprüht. Durch Differenzwiegung läßt sich die abgeschiedene Pulverlackmenge bestimmten und eine Abscheidequote in % definieren sowie durch die Ladungsübertragung ein Stromfluß (µA) abgreifen.

| Druck [bar] | Strom [µA] | Abscheidequote [%] |
|---|---|---|
| 3 | 1,2 | 78 |

1.3.3

5 Teile des erfindungsgemäßen Magenta-Pigmentes und 1 Teil des in DE-A-4 031 705, Beispiel 5 beschriebenen Ladungssteuermittels der Formel

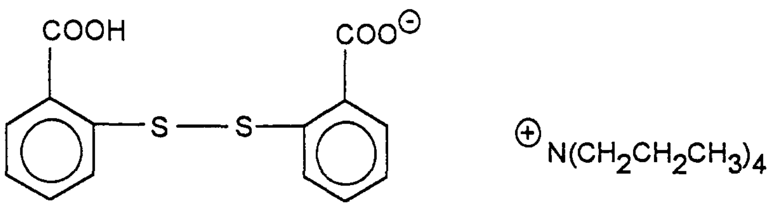

werden, wie in Beispiel 1.3.1 beschrieben, in ein Tonerbindemittel (Polyester auf Bisphenol-A-Basis) eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 5 Min. | - 1 |
| 10 Min. | + 1 |
| 30 Min. | + 2 |
| 2 Std. | + 3 |
| 24 Std. | + 2 |

1.3.4

5 Teile des erfindungsgemäßen Magenta-Pigmentes und 1 Teil des in DE-A-3 901 153, Herstellungsbeispiel 1, beschriebenen Ladungssteuermittel-Gemisches (hochgradig fluoriertes Ammoniumsalz mit n = 2 - 5) der Formel

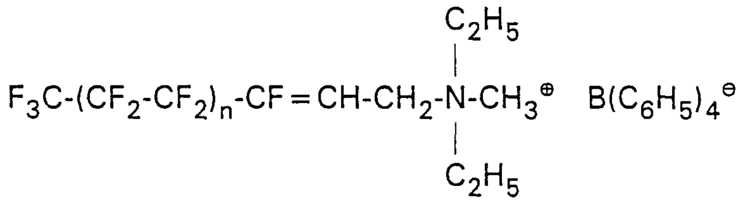

werden, wie in Beispiel 1.3.1 beschrieben, in ein Tonerbindemittel (Polyester auf Bisphenol-A-Basis) eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 5 Min. | - 14 |
| 10 Min. | - 18 |
| 30 Min. | - 20 |
| 2 Std. | - 21 |
| 24 Std. | - 21 |

1.3.5

5 Teile des erfindungsgemäßen Pigmentes und 1 Teil des in DE-A-4 103 610, Herstellungsbeispiel 2, beschriebenen Ladungssteuermittel-Gemisches (kationisches Polymer mit x = 150 - 800) der Formel

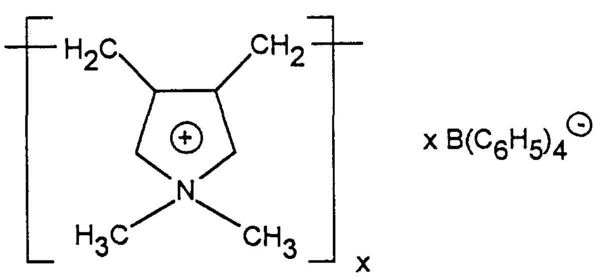

werden, wie in Beispiel 1.3.1 beschrieben, in ein Tonerbindemittel (Polyester auf Bisphenol-A-Basis) eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 5 Min. | - 9 |
| 10 Min. | - 9 |
| 30 Min. | - 9 |
| 2 Std. | - 9 |
| 24 Std. | - 9 |

Vergleichsbeispiel 1

Das im Vergleichsbeispiel 1 eingesetzte herkömmliche C.I. Pigment Red 57:1 ist durch folgende Eigenschaften charakterisiert:

1.1 Pigmentcharakteristik

| | |
|---|---|
| BET Oberfläche | 35 $m^2/g$ |
| Restfeuchte | 0,5 % (Karl-Fischer: 3,6 %, inkusive Kristallwasser) |
| Restsalzgehalt | 0,1 mS/cm |
| pH | 7,1 |

Thermostabilität: Zersetzungstemperatur > 250°C (DTA)

Teilchengröße:

$d_{50}$ =160 nm; $d_{25}$ = 103 nm; $d_{75}$ = 187 nm.

Teilchenform:

Das Länge-Breite-Verhältnis wurde bestimmt mit 2,85:1

Dielektrische Kenndaten

| | | |
|---|---|---|
| $\Omega \cdot cm$: | | $3 \cdot 10^{15}$ |
| $\varepsilon$: | (1 kHz) | 4,2 |
| $\tan \delta$ | (1 kHz) | $3 \cdot 10^{-2}$ |

Röntgenbeugungsdiagramm ($CuK_\alpha$-Strahlung):

2 Theta (s= stark, m= mittel, w= schwach):
4,85 (s); 11,94 (w); 15,09 (m); 15,66 (m); 18,34 (s); 18,68 (s); 21,44 (m); 26,06 (s); 27,31 (m).

Vergleichsbeispiel 1.2

Die Erstellung und Vermessung des Testtoners erfolgt, wie in Beispiel 1.2 beschrieben.

Vergleichsbeispiel 1.3 - Elektrostatische Eigenschaften

Vergleichsbeispiel 1.3.1

5 Teile des Pigmentes werden, wie in Beispiel 1.3.1 beschrieben in das Tonerbindemittel eingearbeitet und vermessen:

| Aktivierdauer | Aufladung q/m [µC/g] |
|---|---|
| 5 Min. | - 7 |
| 10 Min. | - 8 |
| 30 Min. | - 10 |
| 2 Std. | - 13 |
| 24 Std. | - 23 |

## Patentansprüche

1. Verwendung eines Azopigments C.I. Pigment Red 57:1 als Farbmittel in elektrophotographischen Tonern und

Entwicklern, Pulvern und Pulverlacken, Ink-Jet-Tinten sowie in Elektretmaterialien, **dadurch gekennzeichnet, daß** das Azopigment eine spezifische Oberfläche des Pigmentpulvers von mehr als 70 $m^2$/g hat,

20 bis 50 Gew.-% bezogen auf das Gesamtgewicht von Hilfsmittel und Azopigment, eines Hilfsmittels aus der Gruppe der Kolophoniumharze oder Abietinsäuren enthält,

und daß die Azopigmentteilchen ein Länge-zu-Breite-Verhältnis von durchschnittlich kleiner als 2,8:1 und eine mittlere Teilchengröße $d_{50}$ von kleiner als 130 nm besitzen.

2. Verwendung nach Anspruch 1, **dadurch gekennzeichnet, daß** die spezifische Oberfläche des Pigmentpulvers größer als 80 $m^2$/g, vorzugsweise größer als 85 $m^2$/g, ist.

3. Verwendung nach Anspruch 1 oder 2, **dadurch gekennzeichnet, daß** das Azopigment 25 bis 40 Gew.-%, bezogen auf das Gesamtgewicht von Hilfsmittel und Azopigment, eines Hilfsmittels aus der Gruppe der Kolophoniumharze oder Abietinsäuren enthält.

4. Verwendung nach mindestens einem der Ansprüche 1 bis 3, **dadurch gekennzeichnet, daß** zusätzlich ein Ladungssteuermittel aus der Gruppe der Triphenylmethane, Ammonium- und Immoniumverbindungen; fluorierten Ammonium- und fluorierten Immoniumverbindungen; biskationischen Säureamide; polymeren Ammoniumverbindungen;
Diallylammoniumverbindungen; Arylsulfid-Derivate; Phenolderivate; Phosphoniumverbindungen und fluorierten Phosphoniumverbindungen; Calix(n)arenen; ringförmig verknüpften Oligosaccharide; Polyestersalze; Metallkomplexverbindungen; Benzimidazolone; Azine, Thiazine und Oxazine eingesetzt wird.

5. Verwendung nach Anspruch 4, **dadurch gekennzeichnet, daß** das Ladungssteuermittel in einer Menge von 0,01 bis 20 Gew.-%, vorzugsweise 0,1 bis 5 Gew.-%, bezogen auf das Gesamtgewicht des elektrophotographischen Toners oder Entwicklers, Pulvers oder Pulverlacks, eingesetzt wird.

6. Verwendung nach einem oder mehreren der Ansprüche 1 bis 5, **dadurch gekennzeichnet, daß** das Azopigment in einer Menge von 0,01 bis 50 Gew.-%, vorzugsweise 0,5 bis 20 Gew.-%, bezogen auf die Gesamtgewicht des elektrophotographischen Toners oder Entwicklers, eingesetzt wird.

7. Verwendung nach einem oder mehreren der Ansprüche 1 bis 5, ddurch **gekennzeichnet**, daß das Azopigment in einer Menge von 0,01 bis 50 Gew.-%, vorzugsweise 0,5 bis 20 Gew.-%, bezogen auf das Gesamtgewicht des Pulver oder Pulverlacks, eingesetzt wird.

8. Verwendung nach einem oder mehreren der Ansprüche 1 bis 5, **dadurch gekennzeichnet, daß** das Azopigment in einer Menge von 0,01 bis 50 Gew.-%, vorzugsweise 0,5 bis 20 Gew.-%, bezogen auf das Gesamtgewicht der Ink-Jet-Tinte, eingesetzt wird.

## Claims

1. The use of an azo pigment C.I. Pigment Red 57:1 as a colorant in electrophotographic toners and developers, powders and powder coatings, in inkjet inks and in electret materials, wherein the azo pigment powder has a specific surface area of more than 70 $m^2$/g, comprises 20 to 50% by weight, based on the overall weight of auxiliary and azo pigment, of an auxiliary from the group of the rosins or abietic acids, and wherein the azo pigment particles have a length-to-width ratio of on average less than 2.8:1 and a mean particle size $d_{50}$ of less than 130 nm.

2. The use as claimed in claim 1, wherein the specific surface area of the pigment powder is greater than 80 $m^2$/g, preferably greater than 85 $m^2$/g.

3. The use as claimed in claim 1 or 2, wherein the azo pigment comprises from 25 to 40% by weight, based on the overall weight of auxiliary and azo pigment, of an auxiliary from the group of the rosins or abietic acids.

4. The use as claimed in at least one of claims 1 to 3, wherein use is made additionally of a charge control agent from the group of the triphenylmethanes, ammonium and iminium compounds; fluorinated ammonium and fluorinated iminium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclically linked oligosaccharides; polyester salts; metal complex compounds; benzimidazolones; azines, thiazines and oxazines.

5. The use as claimed in claim 4, wherein the charge control agent is employed in an amount of from 0.01 to 20% by weight, preferably from 0.1 to 5% by weight, based on the overall weight of the electrophotographic toner or developer, powder or powder coating.

6. The use as claimed in one or more of claims 1 to 5, wherein the azo pigment is employed in an amount of from 0.01 to 50% by weight, preferably from 0.5 to 20% by weight, based on the overall weight of the electrophotographic toner or developer.

7. The use as claimed in one or more of claims 1 to 5, wherein the azo pigment is employed in an amount of from 0.01 to 50% by weight, preferably 0.5 to 20% by weight, based on the overall weight of the powder or powder coating.

8. The use as claimed in one or more of claims 1 to 5, wherein the azo pigment is employed in an amount of from 0.01 to 50% by weight, preferably from 0.5 to 20% by weight, based on the overall weight of the inkjet ink.

**Revendications**

1. Utilisation d'un pigment azoïque C.I. Pigment Red 57:1 en tant que colorant dans des révélateurs et toners électrophotographiques, des poudres et vernis en poudre, des encres à jet d'encre, ainsi que des électrets, **caractérisée en ce que** le pigment azoïque présente
une surface spécifique de la poudre de pigment supérieure à 70 $m^2$/g,
une teneur de 20 à 50 % en poids, par rapport au poids total d'adjuvant et de pigment azoïque, en un adjuvant pris parmi le groupe des résines de colophane ou d'acides abiétiques,
et que les particules du pigment azoïque présentent un rapport de la longueur à la largeur en moyenne inférieur à 2,8:1 et une taille moyenne de particules $d_{50}$ inférieure à 130 nm.

2. Utilisation selon la revendication 1, **caractérisée en ce que** la surface spécifique du pigpment est supérieure à 80 $m^2$/g, de préférence supérieure à 85 $m^2$/g.

3. Utilisation selon la revendication 1 ou 2, **caractérisée en ce que** le pigment azoïque présente une teneur de 25 à 40 % en poids, par rapport au poids total de l'adjuvant et du pigment azoïque, en un adjuvant pris parmi le groupe de résines de colophane ou d'acides abiétiques.

4. Utilisation selon au moins l'une des revendications 1 à 3, **caractérisée en ce qu'**on utilise en plus un agent de contrôle de charge pris parmi le groupe des triphénylméthanes, des composés d'ammonium et d'immonium ; des composés fluorés d'ammonium et des composés fluorés d'immonium ; des amides d'acides biscationiques ; des composés polymères d'ammonium ; des composés de diallylammonium ; des dérivés de sulfures d'aryles ; des dérivés du phénol ; des composés de phosphonium et des composés fluorés de phosphonium ; des calix(n) arènes ; des oligosaccharides reliés en cycle ; des sels de polyesters.; des composés de complexes métallifères ; des benzimidazolones ; des azines, des thiazines ou oxazines.

5. Utilisation selon la revendication 4, **caractérisée en ce qu'**on utilise l'agent de contrôle de charge dans une quantité de 0,01 à 20 % en poids, de préférence de 0,1 à 5 % en poids, par rapport au poids total du révélateur ou du toner électrophotographique, du vernis en poudre ou de poudre.

6. Utilisation selon une ou plusieurs des revendications 1 à 5, **caractérisée en ce qu'**on utilise le pigment azoïque dans une quantité de 0,01 à 50 % en poids, de préférence de 0,5 à 20 % en poids, par rapport au poids total du révélateur ou toner électrophotographique.

7. Utilisation selon une ou plusieurs des revendications 1 à 5, **caractérisée en ce qu'**on utilise le pigment azoïque dans une quantité de 0,01 à 50 % en poids, de préférence de 0,5 à 20 % en poids, par rapport au poids total de la poudre ou du vernis en poudre.

8. Utilisation selon une ou plusieurs des revendications 1 à 5, **caractérisée en ce qu'**on utilise le pigment azoïque dans une quantité de 0,01 à 50 % en poids, de préférence de 0,5 à 20 % en poids, par rapport au poids total de l'encre à jet.